# EUROPÄISCHE PATENTSCHRIFT

(11) **EP 2 161 224 B1**
(45) Veröffentlichungstag und Bekanntmachung des Hinweises auf die Patenterteilung: **30.11.2011**
(21) Anmeldenummer: 08015607.8
(22) Anmeldetag: 04.09.2008
(51) Int. Cl.: B65G 47/34

(54) **Breitenrüstbare Aushubvorrichtung**
lifting device, laterally extensible
Dispositif de levage extensible latéralement

(43) Veröffentlichungstag der Anmeldung: 10.03.2010
(73) Patentinhaber: Ligmatech Automationssysteme GmbH, 09638 Lichtenberg (DE)
(72) Erfinder: Krieger, Mathias, 09638 Lichtenberg (DE); Kaschner, Sirko, 09638 Lichtenberg (DE)
(74) Vertreter: HOFFMANN EITLE

(56) Entgegenhaltungen:
- FR-A- 1 324 441

## Beschreibung

### Technisches Gebiet

Die Erfindung betrifft eine Fördervorrichtung, insbesondre einen stationären Stetigförderer, zum Fördern von Objektstapeln, insbesondere von gestapelten Möbelteilen, mit einer integrierten Hubvorrichtung, die zwischen einer in einer Förderebene der Fördervorrichtung liegenden ersten Position und einer oberhalb der Förderebene der Fördervorrichtung liegenden zweiten Position verfahrbar ist, wobei die Hubvorrichtung einen Kontaktbereich umfasst, der zum Anheben eines Objektstapels dient. Ferner betrifft die Erfindung ein Verfahren zum Positionieren eines Objektstapels, insbesondere von gestapelten Möbelteilen, auf zwei Ladeleisten und Verwendung einer entsprechenden Fördervorrichtung.

### Stand der Technik

Beim Transport und Versand von Fertigstapeln, beispielsweise von gestapelten Möbelteilen werden bisher hauptsächlich Paletten, beispielsweise Europaletten, verwendet, die jeweils nach dem Transport eines Fertigstapels zur Wiederverwendung weiter transportiert werden müssen. Der Transport leerer Paletten erfordert beträchtliche Umlaufressourcen sowie Lager- und Transportvolumina, ohne dass hierdurch weitere Fertigstapel transportiert werden. Die damit einhergehenden Leertransporte sind aufwändig und kostenintensiv, so dass alternative Transportmethoden, beispielsweise die Verwendung von Einweg-Ladeleisten statt Mehrweg-Paletten, angeregt wurden.

Die oben genannten Ladeleisten dienen gewissermaßen als Palettenkufen zum Transport von Fertigstapeln, beispielsweise gestapelten verpackten Möbelteilen auf geeigneten Trägermaterialien. Ein Beispiel eines solchen Trägermaterials ist eine Spanplatte. Die zu transportierenden Fertigstapel können unter Umständen aber auch durch ihre Eigenstabilität und entsprechende Schutzverpackung, beispielsweise Kartonage, direkt auf den Ladeleisten transportiert werden. Die verwendeten Ladeleisten können nach dem Transport des Fertigstapels einfach entsorgt werden, wodurch ein Leertransport von Ladeleisten zum Aufrechterhalten des Umlaufs entfallen kann.

Um Fertigstapel auf Ladeleisten zu transportieren, müssen die Fertigstapel zunächst auf die Ladeleisten gebracht werden. Hierzu müssen die Fertigstapel von einer Hubvorrichtung angehoben werden, damit die Ladeleisten unterhalb des Fertigstapels angebracht und an dem Fertigstapel befestigt werden können. Das Anheben des jeweiligen Stapels muss dabei derart erfolgen, dass zwischen den jeweiligen Außenkanten des Stapels und der Auflage der anhebenden Hubvorrichtung so viel Freiraum verbleibt, dass die Ladeleisten von unten an dem Stapel angebracht werden können. Bei standardisierten, insbesondere mit einem Standardmaß versehenen Stapeln, kann die Hubvorrichtung eine entsprechend fest dimensionierte Auflagefläche aufweisen, so dass zwischen den entsprechenden Außenkanten des Stapels und der Auflage genau der benötigte Freiraum existiert und die Ladeleisten problemlos unterhalb des Stapels angebracht werden können. Dabei werden die Stapel durch eine Fördervorrichtung, beispielsweise über Transportrollenbänder, zu der Hubvorrichtung gefördert und von der Hubvorrichtung, die beispielsweise als ein Hubtisch ausgeführt sein kann, mit einer zentral unterhalb des anzuhebenden Stapels angreifenden Auflagefläche ausgehoben.

Ein Problem einer solchen Konstruktion ist jedoch, dass die Breite der Auflagefläche des Hubtischs nicht variieren kann und der Hubtisch daher auf eine minimale Breite der anzuhebenden Stapel angepasst ist. Wenn jedoch Stapel zum Weitertransport angefördert werden, deren Breite deutlich über der zu erwartenden minimalen Breite der Stapel liegt, auf welche die Breite der Auflagefläche der Hubvorrichtung abgestimmt ist, ist ein sicheres Anheben des Stapels nicht mehr möglich. Wird nämlich versucht, einen wesentlich über die Breite der Auflagefläche der Hubvorrichtung hinausragenden Stapel anzuheben, kann der Stapel von der Hubvorrichtung herunterfallen oder sich so weit zu den seitlichen Außenkanten des Stapels verbiegen, dass die transportierten Gegenstände zerstört werden oder verrutschen.

Eine alternative Lösung sieht vor, dass bei einer geteilten Transportvorrichtung, beispielsweise einer Rollenbahn, zwischen den einzelnen Rollen Hubauflagen existieren, die in Transportrichtung beabstandet sind und die derart miteinander verbunden sind, dass hierdurch ein ausreichend großer, das heißt eine minimale Größe überschreitender, Stapel angehoben werden kann. Die Abstände der zwischen den Rollen anhebbaren Auflagen in Förderrichtung sind jedoch fest vorgegeben und müssen mindestens so dimensioniert sein, dass jeweils eine Ladeleiste zwischen den entsprechend zwischen den Rollen hervorstehenden Auflagen seitlich eingebracht werden kann.

Ein Nachteil dieser Ausführung besteht darin, dass die Hubvorrichtung insbesondere in der Förderrichtung nicht variabel ist und die Position der Ladeleisten durch die Hubvorrichtung fest vorgegeben ist. Es ist also nicht möglich, eine angepasste Anzahl von Ladeleisten für Objektstapel unterschiedlicher Ausdehnung in Förderrichtung zu verwenden oder die genaue Position der Ladeleisten in Bezug auf den Objektstapel flexibel einzustellen. Darüber hinaus lassen sich Objekte, die in Förderrichtung eine geringere Ausdehnung aufweisen, als der kleinste Abstand zwischen den in Förderrichtung beabstandeten Auflagen, nicht ausheben.

### Darstellung der Erfindung

Die Aufgabe der vorliegenden Erfindung besteht darin, eine dem oben genannten technischen Gebiet zugehörige Fördervorrichtung zu konstruieren, mit der Objektstapel verschiedener Ausdehnungen, die auf einer Fördervorrichtung gefördert werden, sicher und effizient auf entsprechend angepasste Ladeleisten bringbar sind, sowie ein Verfahren hierfür anzugeben.

Erfindungsgemäß ist die Ausdehnung des Kontaktbereichs der Hubvorrichtung quer zu einer Förderrichtung, das heißt im Wesentlichen parallel zur Förderebene (E) und senkrecht zur Förderrichtung, einstellbar. Hierdurch ist gewährleistet, dass ein anzuhebender Objektstapel in seiner Ausdehnung quer zur Förderrichtung nicht durch die Hubvorrichtung in den bisher üblichen engen Grenzen beschränkt ist, sondern dass die Hubvorrichtung an eine entsprechende Ausdehnung oder Größe eines Objektstapels angepasst werden kann. Hierdurch ist es möglich, Objektstapel verschiedener Ausdehnungen sowohl in Förderrichtung als auch quer dazu sicher anzuheben und auf Ladeleisten zum Weitertransport zu bringen. Bei der Fördervorrichtung handelt es sich bevorzugt um einen stationären Stetigförderer, beispielsweise um Förderrollen. Es ist jedoch auch möglich, Förderbänder oder Kettenförderer zu verwenden, wenn diese im Bereich der Hubvorrichtung an einer Vielzahl von Positionen entlang der Förderrichtung unterbrochen sind, also aus einer Vielzahl von einzelnen Segmenten bestehen, die hintereinander entlang der Förderrichtung angeordnet sind und jeweils einen Zwischenraum zwischen einzelnen Teilen der Förderrichtung frei lassen. In diesem Zwischenraum können dann den Kontaktbereich der Hubvorrichtung bildende Auflageelemente quer zur Förderrichtung verfahren und damit die Ausdehnung des Kontaktbereichs quer zur Förderrichtung einstellen. Durchgehende Förderbänder oder Kettenförderer sind jedoch als Fördervorrichtung für die erfindungsgemäße breitenrüstbare Aushubvorrichtung ungeeignet. Die Förderrichtung entspricht dabei der Rollen- bzw. Bandsegmentlaufrichtung. Sie muss nicht geradlinig sein, sondern kann auch entlang einer Kurve verlaufen. In diesem Fall ist mit quer zur Förderrichtung bzw. entlang der Förderrichtung eine im Wesentlichen senkrecht zu einer Tangente an die Förderrichtung bzw. parallel zur Richtung der Tangente an die Förderrichtung und im Wesentlichen parallel zur Förderebene verlaufende Richtung gemeint.

Eine bevorzugte Ausführungsform , in der die Fördervorrichtung im Bereich der Hubvorrichtung zwei im Wesentlichen parallel zu einer Förderrichtung verlaufende Fördermittel aufweist, zeichnet sich ferner bevorzugt dadurch aus, dass die Fördermittel synchron angetrieben und miteinander gekoppelt sind und bevorzugt symmetrisch um die Hubvorrichtung angeordnet sind. Dies stellt sicher, dass ein über die Fördervorrichtung transportierter Objektstapel auch in dieser Ausführungsform im Bereich der Hubvorrichtung gleichmäßig transportierbar ist und sich nicht aufgrund unterschiedlicher Antriebsgeschwindigkeiten der Fördermittel, beispielsweise also der Förderrollen, in der Förderebene dreht oder sich ungleichmäßig auf der Fördervorrichtung bewegt.

Der Kontaktbereich der Hubvorrichtung, die zwischen einer in der Förderebene der Fördervorrichtung liegenden ersten Position und einer oberhalb der Förderebene liegenden zweiten Position verfahrbar, d.h. aushebbar ist, bildet bevorzugt ein Rechteck, das durch die äußeren Ränder der entsprechenden Auflagen der Hubvorrichtung definiert ist. Es handelt sich bei dem Kontaktbereich also nicht um eine durchgehende Fläche, wie dies beispielsweise bei einem herkömmlichen Hubtisch der Fall ist. Der unterbrochene Kontaktbereich kann auch in der bevorzugten Ausführungsform mit zwei Fördermitteln, zwischen denen sich die Hubvorrichtung befindet, je nach Ausdehnung des Kontaktbereichs quer zur Förderrichtung mit den um die Hubvorrichtung herum angeordneten Fördermitteln überlappen, d.h., dass die Auflagen des Kontaktbereichs in den Zwischenräumen zwischen den einzelnen Rollen oder Bandabschnitten der Fördervorrichtung hindurch vertikal verfahrbar sind. Im Bereich der Förderebene, d.h. in der Höhe der Fördervorrichtung, beispielsweise der Förderrollen, liegen also aushebbare, d.h. verfahrbare Auflagen der Hubvorrichtung zwischen einzelnen Elementen der Fördervorrichtung, beispielsweise zwischen einzelnen Förderrollen, Bänder- oder Kettenfördererabschnitten.

Dass der Kontaktbereich in einer bevorzugten Ausführungsform im Wesentlichen zwischen den zwei Fördermitteln angeordnet ist, bedeutet, dass sich die Ausdehnung des Kontaktbereichs quer zur Förderrichtung innerhalb der äußeren Grenzen der Fördermittel befindet, im Fall der minimalen Ausdehnung des Kontaktbereichs quer zur Förderrichtung auch innerhalb eines durch die Fördermittel quer zur Förderrichtung begrenzten Bereichs zwischen den Fördermitteln befindet. Bei einer größeren Ausdehnung des Kontaktbereichs quer zur Förderrichtung überlappt der Kontaktbereich jedoch mit den entsprechenden Fördermitteln.

In der erfindungsgemäßen Ausführungsform, bei der ein einziges Fördermittel im Bereich der Hubvorrichtung vorgesehen ist, entspricht dies einer Anordnung, bei welcher der Kontaktbereich in der ersten Position zwischen den äußeren Grenzen des Fördermittels, beispielsweise also den äußeren Grenzen der Rollen des Rollenförderers liegt. Der Kontaktbereich überlappt in diesem Fall stets mit dem Fördermittel.

Mit Vorteil ist der Kontaktbereich mit mehreren Auflagen ausgeführt, wobei sich die Auflagen jeweils in einer, im Wesentlichen quer zur Förderrichtung ausgerichtete Richtung erstrecken und zumindest eine der Auflagen entlang dieser Richtung verschiebbar ist. Aus Stabilitätsgründen wird jedoch weiter bevorzugt, dass mehrere der Auflagen entlang der, im Wesentlichen quer zur Förderrichtung verlaufenden Richtung verschiebbar sind. Mit Vorteil ist die Auflage bzw. sind die Auflagen dabei stufenlos verschiebbar. Es kann jedoch auch eine oder mehrere stationäre Auflagen geben, beispielsweise um einen zentralen Bereich des Kontaktbereichs zu bilden, wodurch die Gesamtkonstruktion der Hubvorrichtung vereinfacht werden kann.

Mit Vorteil weisen die Auflagen eine Beabstandung voneinander in Förderrichtung auf, und die Fördervorrichtung ist dadurch gekennzeichnet, dass die Beabstandung auf einer Auflagelänge zumindest einer Ladeleiste, bevorzugt zweier Ladeleisten abgestimmt ist, auf denen der Objektstapel abzulegen ist. Die Ladeleiste bezeichnet dabei stellvertretend eine Transporteinheit, auf welcher der Objektstapel zum Transport abgelegt werden soll. Die Ladeleiste ist in der Form einer Kufe zum Anbringen von unten an dem Objektstapel ausgebildet. Dass die Beabstandung der Auflagen auf die Auflagelänge der Ladeleiste bzw. der Ladeleisten abgestimmt ist, bedeutet, dass die Rollen der Fördermittel einen sicheren Transport des auf den Ladeleisten abgelegten Objektstapels sicherstellen. Die Beabstandung der Rollen ist also so groß gewählt, dass die Gefahr eines Verkantens der Ladeleiste mit einzelnen Rollen der Rollenbahnen ausgeschlossen ist.

Bevorzugt weist die Hubvorrichtung zumindest einen anhebbaren Rahmen auf, der besonders bevorzugt zumindest eine Auflage hält, wobei diese quer zur Förderrichtung verschiebbar ist. Der anhebbare Rahmen stellt eine sichere Halterung für die Auflage dar und ermöglicht somit ein Anheben auch schwererer Objektstapel bei gleichzeitig einfacher konstruktiver Ausgestaltung der Hubvorrichtung. Bevorzugt hält der anhebbare Rahmen jedoch mehr als eine Auflage, so dass der anzuhebende Objektstapel besonders sicher durch die Auflagen gehalten wird.

Mit Vorteil weist die Hubvorrichtung zwei Auflagereihen auf, die relativ zueinander, bevorzugt miteinander gekoppelt, quer zur Förderrichtung verschiebbar sind. Das Vorhandensein von zwei Auflagereihen erleichtert die symmetrische Positionierung des Objektstapels auf den Ladeleisten. Dies gilt zumindest für den Fall, in dem ein Objektstapel auf Ladeleisten aufgelegt werden soll, die an gegenüberliegenden Enden des Objektstapels anzuordnen sind. Die bevorzugte symmetrische Ausführung der Fördervorrichtung mit Fördermitteln, die um die Hubvorrichtung herum angeordnet sind, führt zu einem besonderen Vorteil einer symmetrischen Kopplung zweier Auflagereihen miteinander bezüglich der Verschiebung quer zur Förderrichtung der Fördervorrichtung. Zwei Auflagereihen, die relativ zueinander verschiebbar sind, ermöglichen ein besonders sicheres und flexibles Ausheben eines Objektstapels, weil hierbei der Kontaktbereich der Hubvorrichtung gleichmäßig in zwei Richtungen quer zur Förderrichtung in seiner Ausdehnung einstellbar ist.

In einer weiteren bevorzugten Ausführungsform umfasst die Hubvorrichtung einen quer zur Fördervorrichtung ausgerichteten Linearantrieb zum Einstellen der Ausdehnung des Kontaktbereichs, insbesondere zum Einstellen der jeweiligen Position der Auflagen. Der Linearantrieb ist bevorzugt mit einer Linearführung ausgestattet, welche die Antriebsrichtung des Linearantriebs definiert und eine jeweils quer zur Förderrichtung ausgerichtete Ausdehnung des Kontaktbereichs sicherstellt. Das Einstellen des Ausdehnungskontaktbereichs erfolgt dabei bevorzugt durch Einstellen der jeweiligen Position der Auflagen, durch die der Kontaktbereich bevorzugt definiert wird.

Mit Vorteil weist der Linearantrieb zumindest ein Zahnrad und zumindest eine Zahnstange auf. Hierdurch wird eine besonders vorteilhafte Ausführungsform eines Linearantriebs angegeben, die eine sichere und einfache Möglichkeit zum Einstellen der Ausdehnung des Kontaktbereichs bzw. der jeweiligen Position der Auflagen ermöglicht.

Mit Vorteil sind die Auflagereihen durch ein Ineinandergreifen von zwei Zahnrädern des Linearantriebs miteinander gekoppelt quer zur Förderrichtung verschiebbar. Die Auflagereihen können dabei auch aus je einer Auflage bestehen. Es ist also nicht nötig, dass mehrere Auflagen zu einer Auflagereihe zusammengefasst werden. Dabei ist es auch möglich, dass ein Rahmen mit einer Auflage durch den oben beschriebenen Mechanismus gekoppelt verschiebbar ist. Die Kopplung durch Ineinandergreifen von zwei Zahnrädern des Linearantriebs stellt eine besonders einfache Ausführung dar, weil hierdurch eine besonders einfache mechanische Ausgestaltung der Fördervorrichtung möglich ist.

Mit Vorteil weist die Fördervorrichtung eine Sensoreinrichtung zum Ermitteln der Abmessung des Objektstapels, zumindest quer zur Förderrichtung, auf. Der jeweils auszuhebende Objektstapel kann bei der erfindungsgemäßen Fördervorrichtung hinsichtlich seiner Ausdehnung quer zur Förderrichtung, aber auch entlang des Fördervorrichtung in weiten Grenzen beliebig dimensioniert sein. Um die Hubvorrichtung auf die tatsächliche Größe des anzuhebenden Objektstapels vor dem eigentlichen Hubvorgang anzupassen, werden die Abmessungen des Objektstapels bevorzugt durch eine Sensoreinrichtung bestimmt und die Hubvorrichtung entsprechend eingestellt. Statt einer Sensoreinrichtung ist es jedoch auch möglich, die anzuwendenden Abmessungen manuell einzugeben oder durch einen fest vorgegebenen Ablauf von einzelnen aufeinanderfolgenden Objektstapeln oder Chargen von Objektstapeln zu programmieren.

Ein erfindungsgemäßes Verfahren zum Positionieren eines Objektstapels, insbesondere von gestapelten Möbelteilen, auf zwei Ladeleisten unter Verwendung einer Fördervorrichtung, wie sie oben beschrieben ist, umfasst ein Anheben des Objektstapels durch die Hubvorrichtung und danach ein Zuführen der Ladeleisten quer zur Förderrichtung, wobei die Ladeleisten auf die Fördermittel aufgelegt werden, sowie danach ein Absetzen des Objektstapels auf die Ladeleisten, die sich auf den Fördermitteln befinden.

Mit Vorteil wird vor dem Anheben des Objektstapels ein Einstellen der Ausdehnung des Kontaktbereichs in Abhängigkeit der Abmessungen des Objektstapels quer zur Förderrichtung und ein Zuführen des Objektstapels durch die Fördervorrichtung durchgeführt und nach dem Absetzen des Objektstapels auf die Ladeleisten wird der Objektstapel mit Vorteil auf den Ladeleisten von der Fördervorrichtung weiterbefördert.

Durch das oben beschriebene Verfahren zum Positionieren eines Objektstapels ist es besonders effizient möglich, die Objektstapel auf Ladeleisten oder auch andere Transporthilfsmittel anzuheben, wobei das Anheben besonders sicher und zuverlässig erfolgt. Die erfindungsgemäße Fördervorrichtung lässt sich ohne weiteres in bestehende Fördervorrichtungen integrieren. Auch die Hubvorrichtung kann in einer bestehenden Fördervorrichtung, bevorzugt mit zwei im Wesentlichen parallel zueinander verlaufenden Fördermitteln mit einem quer zur Förderrichtung ausgedehnten Zwischenraum zwischen den Fördermitteln, eingesetzt werden. Eine entsprechend ausgerüstete Fördervorrichtung erlaubt die Durchführung des erfindungsgemäßen Verfahrens.

Weitere bevorzugte Ausführungsformen ergeben sich aus der nachfolgenden Figurenbeschreibung sowie der Gesamtheit der Ansprüche.

### Kurze Figurenbeschreibung

- Fig. 1: zeigt eine Fördervorrichtung gemäß einer bevorzugten Ausführungsform der vorliegenden Erfindung;
- Fig. 2: zeigt die Fördervorrichtung aus Fig. 1 mit einem zu fördernden Objektstapel in einer Draufsicht;
- Fig. 3: zeigt die Fördervorrichtung aus Figuren 1 und 2 mit einem zu fördernden Objektstapel in einer Draufsicht, wobei der zu fördernde Objektstapel quer zur Förderrichtung eine größere Ausdehnung aufweist als derjenige aus Fig. 2;
- Fig. 4A und 4B: zeigen eine Querschnittsseitenansicht der Fördervorrichtung, die schon in den Figuren 1-3 gezeigt ist, in einer Position, die der aus Fig. 2 entspricht;
- Fig. 5A - 5C: zeigen eine Qüerschnittsseitenansicht der Fördervorrichtung, die schon in den Figuren 1-4 dargestellt ist, wobei hier die Ausdehnung des Kontaktbereichs quer zur Förderrichtung illustriert wird;
- Fig. 6: zeigt eine Ladeleiste;
- Fig. 7: zeigt einen Objektstapel auf einem Paar von Ladeleisten, wie sie in Fig. 6 gezeigt sind; und
- Fig. 8: zeigt eine Fördervorrichtung in einer weiteren Ausführungsform der vorliegenden Erfindung.

### Wege zur Ausführung der Erfindung

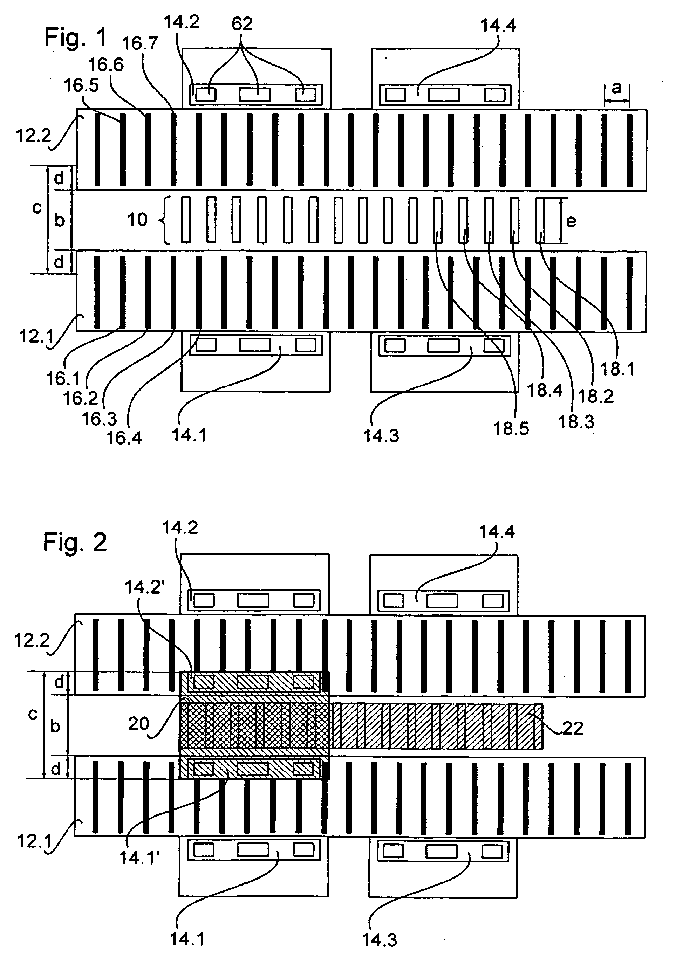

Fig. 1 zeigt eine Draufsicht eines bevorzugten Ausführungsbeispiels der erfindungsgemäßen Fördervorrichtung. Zwischen zwei Rollenförderern 12.1, 12.2, die im Wesentlichen in Rechts-Links-Richtung in Fig. 1 verlaufen, befindet sich eine Hubvorrichtung 10, die sich parallel zur Ausrichtung der Rollenförderer 12.1, 12.2 erstreckt. Sowohl der in Fig. 1 unten eingezeichnete Rollenförderer 12.1 als auch der oben eingezeichnete Rollenförderer 12.2 bestehen aus mehreren beabstandeten Rollen 16.1 bis 16.7, von denen in Fig. 1 exemplarisch eine Auswahl mit Referenzzeichen versehen ist.

Die einzelnen Rollen 16.1 bis 16.7 der Rollenförderer 12.1, 12.2 sind voneinander beabstandet. Das Maß der Beabstandung a ist dabei entlang der Rollenförderer 12.1, 12.2 gleich. Der Abstand b zwischen den Rollenförderern 12.1, 12.2 ist dabei derart gewählt, dass bei einem Transport eines Objektstapels auf beiden Seiten des Zwischenraums eine minimale Auflagefläche von einer Breite d quer zur Förderrichtung der Fördervorrichtung auf den Rollenförderern 12.1, 12.2 aufliegt. Die minimale Breite c des Objekts, das auf der Fördervorrichtung in Förderrichtung gefördert wird, ergibt sich also aus der Summe der minimalen Auflageflächen d auf beiden Rollenförderern 12.1, 12.2 sowie der Breite des Zwischenraums b zwischen den Rollenförderern 12.1, 12.2.

In dem Zwischenraum zwischen den Rollenförderern 12.1, 12.2 befindet sich, wie oben beschrieben, die Hubvorrichtung 10, die aus einer Mehrzahl von Auflagen 18.1...18.5 ect. besteht, von denen in Fig. 1 fünf einzelne Auflagen 18.1...18.5 exemplarisch mit Referenzzeichen versehen sind. Die Breite e der einzelnen Auflagen ist dabei kleiner als die Breite b des Zwischenraums zwischen den einzelnen Rollenförderern 12.1, 12.2. Die Auflagen 18.1...18.5 etc. sind in der hier dargestellten Ausführungsform als feste Auflageflächen ausgebildet, die sich im Wesentlichen quer zur Förderrichtung der Fördervorrichtung erstrecken. Sie werden in der in Fig. 1 dargestellten Ausführungsform als im Wesentlichen quer zur Rechts-Links-Richtung, die der Förderrichtung entspricht, länglich ausgerichtete Rechtecke dargestellt. Es ist jedoch auch möglich, dass die Auflagen 18.1...18.5 etc. frei oder auch gesteuert um eine entsprechend quer zur Förderrichtung der Fördervorrichtung verlaufende Achse drehbar ausgeführt sind. Eine solche Ausführung der Auflagen als Rollen oder Walzen ermöglicht einen zusätzlichen Antrieb eines Objektstapels durch die Hubvorrichtung.

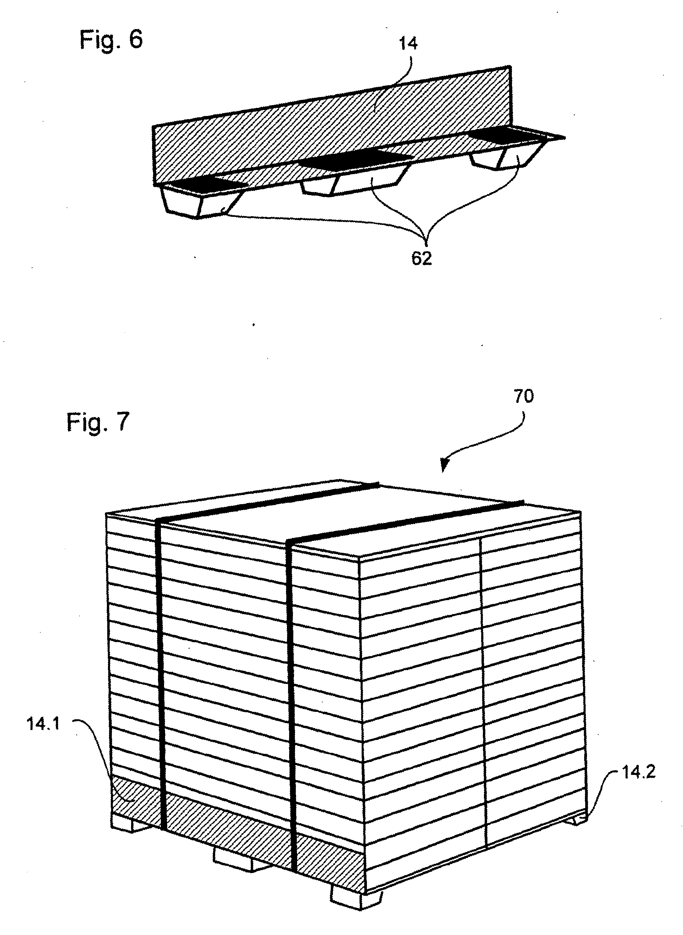

Darüber hinaus ist in Fig. 1 dargestellt, dass sich jenseits der Außenseiten der Rollenförderer 12.1, 12.2 jeweils zwei Ladeleisten 14.1 bis 14.4 befinden, die dort bereitgestellt sind, um unter einen Objektstapel geschoben zu werden, der durch die Hubvorrichtung 10 angehoben wird. Die Ladeleisten 14.1 bis 14.4 werden im Detail in Fig. 6 dargestellt. In der Draufsicht aus Fig. 1 ist dargestellt, wo die Auflageflächen 62 der Ladeleiste 14.2, als Beispiel für die gleich ausgeführten Ladeleisten 14.1 bis 14.4, angeordnet sind.

Es ist zu erkennen, dass die Beabstandung a der Rollen 16.1 bis 16.7 der Rollenförderer 12.1, 12.2 so klein gewählt ist, dass die Ladeleisten 14.1 bis 14.4 auf ihren Auflageflächen 62 über die Rollenförderer 12.1, 12.2 verfahrbar sind. Die Ladeleisten 14.1 bis 14.4 können dabei manuell oder maschinell, beispielsweise im Wesentlichen quer zur Förderrichtung, unter jeweils einen Objektstapel gebracht werden.

Fig. 2 zeigt die Fördervorrichtung aus Fig. 1 in einer Draufsicht. Zusätzlich zu Fig. 1 zeigt Fig. 2 einen Objektstapel 20 und zwei Ladeleisten 14.1', 14.2', die von ihrer ursprünglichen Position unter den Objektstapel 20 gebracht worden sind. Fig. 2 zeigt darüber hinaus die Ladeleisten 14.1 bis 14.4 in ihrer Ausgangsposition, wobei lediglich die Ladeleisten 14.1, 14.2 in die Positionen 14.1' bzw. 14.2' gebracht wurden.

Die Breite f des Objektstapels 20 entspricht etwa der Minimalbreite eines durch die hier dargestellte Fördervorrichtung zu verarbeitenden Objektstapels, weil der Objektstapel 20 symmetrisch über die Rollenförderer 12.1, 12.2 gerade so weit hinausragt, dass die Ladeleisten 14.1', 14.2' den Objektstapel 20 an dessen Außenseiten halten und gleichzeitig entlang der inneren Ränder der Rollenförderer 12.1, 12.2 verlaufen.

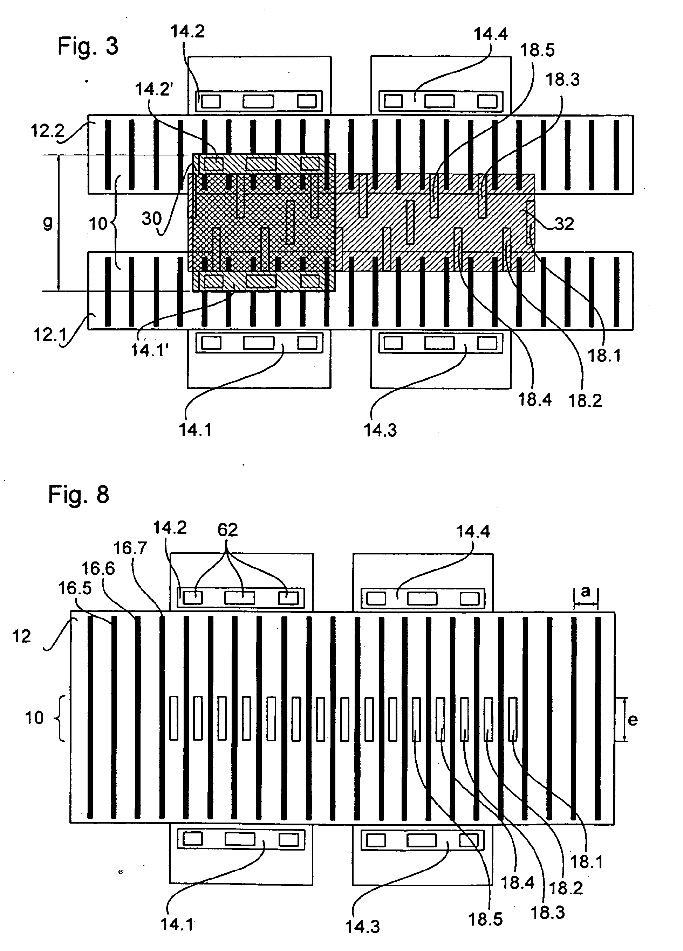

Fig. 3 zeigt die gleiche Ausführungsform der Fördervorrichtung wie die Figuren 1 und 2 in einer Draufsicht, wobei die in Fig. 3 dargestellte Ausführungsform zum Transport und zum Ausheben eines breiteren Objektstapels 30 als dem Objektstapel 20 aus Fig. 2 eingestellt ist.

Die Rollenförderer 12.1, 12.2 sind in der selben Position wie die Rollenförderer 12.1, 12.2 in den vorherigen beiden Figuren, die Hubvorrichtung 10 weist jedoch einen entsprechend eingestellten Kontaktbereich 32 auf, der durch ein Verfahren einzelner Auflagen 18.2...18.5 etc. der Hubvorrichtung 10 quer zur Förderrichtung gegenüber dem Kontaktbereich 22, der in Fig. 2 dargestellt ist, quer zur Förderrichtung vergrößert ist. Der Kontaktbereich 32 der Hubvorrichtung 10 wird hierbei durch die jeweils äußeren Grenzen der Auflagen 18.1...18.5 etc. definiert und ist in dem in Fig. 3 dargestellten Zustand auf die Breite des Objektstapels 30 abgestimmt. Die Breite des Kontaktbereichs 32, also dessen Ausdehnung quer zur Förderrichtung, ist also in Abhängigkeit von der Breite f bzw. g des Objektstapels 20 bzw. 30 so eingestellt, dass zwischen den seitlichen Grenzen des Kontaktbereichs 22 bzw. 32 quer zur Förderrichtung und den Außenseiten des Objektstapels 20 bzw. 30 quer zur Förderrichtung ein Bereich frei bleibt, der im Wesentlichen der Breite der Ladeleisten 14.1', 14.2', also deren Ausdehnung quer zur Förderrichtung entspricht.

In der in Fig. 3 dargestellten Ausführungsform sind einige der Auflagen 18.1 etc. feststehend, d.h. nicht quer zur Förderrichtung verschiebbar ausgeführt. Andere Auflagen 18.2, 18.4 etc. werden in der in Fig. 3 dargestellten Ausführungsform zwischen einzelne Rollen des einen Rollenförderers 12.1 verschoben, wogegen wieder andere Auflagen 18.3, 18.5 etc. zwischen einzelne Rollen des anderen Rollenförderers 12.2 verschoben werden. Auf diese Weise wird der Kontaktbereich 22 bzw. 32 symmetrisch zu beiden Seiten bezüglich der Mitte zwischen den Rollenförderern 12.1, 12.2 erweitert, so dass ein Objektstapel 22 bzw. 32 in Abhängigkeit von dessen Ausdehnung quer zur Förderrichtung sicher ausgehoben und mit Ladeleisten 14.1', 14.2' bestückt werden kann.

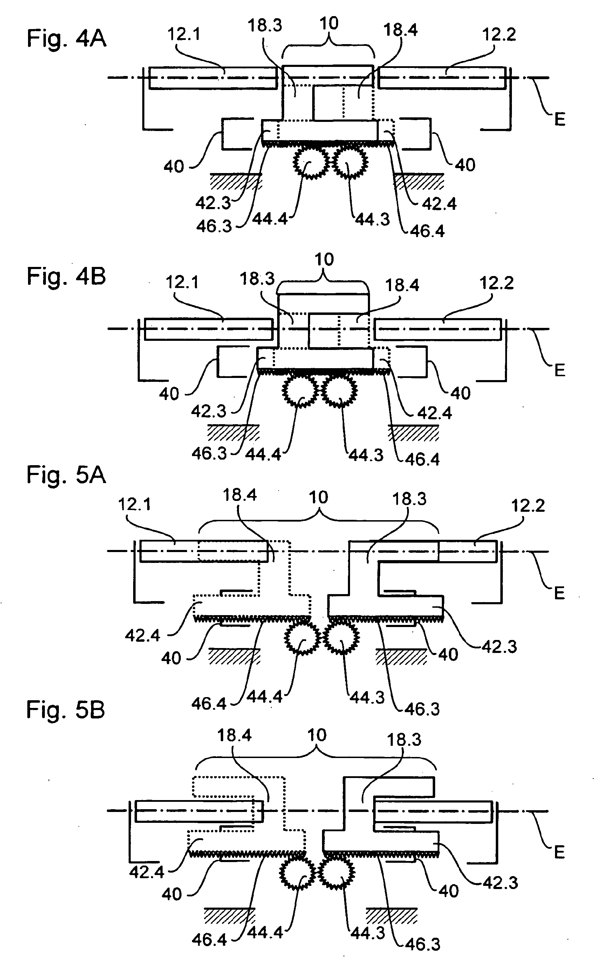

Fig. 4A zeigt eine Querschnittsseitenansicht der Fördervorrichtung, die in den Figuren 1 bis 3 in ihrer Draufsicht dargestellt ist. Die Rollenförderer 12.1, 12.2, die in Fig. 4A links bzw. rechts von der Hubvorrichtung 10 dargestellt sind, definieren eine Förderebene E, in der sich die Hubvorrichtung 10 in der in Fig. 4A dargestellten Position befindet.

Fig. 4A zeigt die Auflage 18.3 und einen Teil der Auflage 18.4, die zusammen mit weiteren Auflagen die Hubvorrichtung 10 bilden. Die Auflage 18.3 ist im Wesentlichen L-förmig mit einem im Wesentlichen horizontal ausgerichteten Auflageteil und einem an dem Auflageteil angebrachten Halterungsteil, der im Wesentlichen vertikal ausgerichtet ist, versehen. Der vertikale Halterungsteil ist wiederum auf einem im Wesentlichen horizontal ausgerichteten Antriebsteil 42.3 angebracht, was entsprechend für die Auflage 18.4 und das Halterungsteil 42.4 gilt.

Die Halterungsteile 42.3, 42.4 weisen an ihrer Unterseite jeweils eine Zahnstange 46.3, 46.4 auf, die jeweils mit einem Zahnrad 44.3, 44.4 wirkverbunden ist. Ein Drehen des Zahnrads 44.3, 44.4 führt zu einer horizontalen Verschiebung der Zahnstange 46.3, 46.4, damit des Antriebsteils 42.3, 42.4 und damit der gesamten Auflage 18.3, 18.4. Das Antriebsteil 42.3, 42.4, die Zahnstange 46.3, 46.4 sowie das Zahnrad 44.3, 44.4 bilden zusammen einen Linearantrieb, der in einem Rahmen 40 untergebracht ist.

Der Rahmen 40 hält die jeweiligen Linearantriebe und damit auch die gesamte Auflage 18.3, 18.4 der Hubvorrichtung 10. In der in Fig. 4A dargestellten Ausführungsform liegen die Auflage 18.3 und die Auflage 18.4 hintereinander entlang der Förderrichtung der Fördervorrichtung bzw. entlang der Förderrichtung der Rollenförderer 12.1, 12.2, wobei die vertikalen Halteteile der Auflagen 18.3, 18.4 gegeneinander versetzt an jeweils einem seitlichen Ende des horizontalen Auflageteils angeordnet sind.

Fig. 4B zeigt die in Fig. 4A dargestellte Ausführungsform in derselben Ansicht, jedoch ist im Gegensatz zu Fig. 4A die Hubvorrichtung 10 um die Höhendifferenz h aus der Förderebene E nach oben angehoben. Hierzu wird der Rahmen 40 unterhalb der Förderebene E um den entsprechenden Betrag h nach oben verschoben, so dass sich die Auflagefläche der Hubvorrichtung 10, die durch die Auflagen 18.3, 18.4 definiert wird, über die Förderebene der Rollenförderer 12.1, 12.2 erhebt. Fig. 4B zeigt somit einen Zustand der Fördervorrichtung, in dem die Hubvorrichtung 10 einen schmalen Objektstapel anzuheben vermag.

Fig. 5A entspricht der Ansicht von Fig. 4A, wobei die Auflagen 18.3, 18.4 horizontal auseinander gefahren sind. Die Auflage 18.4 ragt dabei zwischen einzelne Rollen des Rollenförderers 12.1 und die Auflage 18.3 ragt zwischen einzelne Rollen des Rollenförderers 12.2. Unterhalb der Förderebene E ist, wie schon in Fig. 4A dargestellt, der Linearantrieb und der Rahmen 40 gezeigt, wobei sich der Linearantrieb in einer Position befindet, die dem größten Abstand, also der größten Ausdehnung des Kontaktbereichs der Hubvorrichtung 10, quer zur Förderrichtung der Auflagen 18.3, 18.4 entspricht. Aus Darstellungsgründen ist in der Förderebene E der jeweils eine entsprechende Auflage 18.3, 18.4 überdeckende Teil des Rollenförderers 12.1, 12.2 ausgelassen, so dass die Ausdehnung der Auflagen 18.3, 18.4 deutlich zu erkennen ist.

Fig. 5B entspricht der Situation aus Fig. 4B, in der sich die Fördervorrichtung aus Fig. 5A befindet. Auch in Fig. 5B ist der Rahmen 40 der Hubvorrichtung 10 um den Betrag h aus der Förderebene E angehoben und eignet sich daher zum Ausheben eines Objektstapels, der im Gegensatz zu der Situation aus Fig. 4B eine maximale Breite quer zur Förderrichtung der Fördervorrichtung aufweist.

Fig. 6 zeigt eine Ladeleiste 14 als Beispiel für die in den Figuren 1 bis 3 und 7 dargestellten Ladeleisten 14.1 bis 14.4 sowie 14.1' und 14.2'. Die Ladeleiste 14 stellt ein längliches Winkelelement dar, das zwei sich im Wesentlichen senkrecht zueinander erstreckende Schenkel aufweist. Die Schenkel können dabei bevorzugt in einem etwas kleineren Winkel als 90°, beispielsweise 85°-88° zueinander stehen und nachgiebig sein, um eine Vorspannung bei Anbringung an einen rechtwinkligen Kantenabschnitt zu erhalten. Einer der Schenkel dient als untere Auflagefläche und weist drei Auswölbungen auf, die Auflageflächen 62 der Ladeleiste 14 definieren. Der andere Schenkel der Ladeleiste 14, der im Wesentlichen senkrecht zu dem Schenkel mit den Auswölbungen verläuft, dient als seitlicher Anschlag für einen Objektstapel, der mit der Ladeleiste 14 ausgerüstet ist.

Fig. 7 zeigt beispielhaft einen Objektstapel 70, der mit zwei Ladeleisten 14.1, 14.2 versehen ist. Aus Fig. 7 ist erkennbar, dass für die Installation der Ladeleisten 14.1, 14.2 die Notwendigkeit besteht, den Objektstapel 70 an einer zentralen Stelle anzuheben, um die Ladeleisten 14.1, 14.2 seitlich unter dem Objektstapel 70 anzubringen. Damit die Ladeleisten 14.1, 14.2 unter den Objektstapel 70 gebracht werden können, muss zudem zumindest in dem Bereich der Grundfläche des Objektstapels 70, in dem die Ladeleisten 14.1, 14.2 unter dem Objektstapel 70 angebracht werden sollen, ein Seitenbereich frei sein, in dem die Ladeleisten 14.1, 14.2 anzubringen sind und auf den keine Kraft von unten wirken darf. Anderenfalls könnten die Ladeleisten 14.1, 14.2 nicht seitlich unter dem Objektstapel 70 angebracht werden.

Fig. 8 zeigt eine Draufsicht einer weiteren Ausführungsform der Fördervorrichtung. Die Vorrichtung gleicht in weiten Teilen der Vorrichtung, die schon in Fig. 1 bis 3 dargestellt ist. Anders als in der dort dargestellten Ausführungsform umfasst die in Fig. 8 gezeigte Ausführungsform jedoch nur einen Rollenförderer 12. Für die übrigen Teile der in Fig. 8 dargestellten Ausführungsform gilt das zu den oben genannten Figuren gesagte analog.

Es ist natürlich auch möglich, dass ein Objektstapel mehrere Ladeleisten 14.1 bis 14.4 aufweist, die einen weiteren Transport des Objektstapels erleichtern. Hierzu können beispielsweise mehrere Ladeleisten entlang einer Kante des Objektstapels angebracht werden. Die Auflagefläche der Ladeleisten 14 lässt sich auch variieren, so dass die Ladeleiste 14 auch auf unterschiedliche Beabstandungen a zwischen einzelnen Rollenelementen 16.1 bis 16.7 der Rollenförderer 12.1, 12.2 angepasst werden können.

Alternativ zu der in Fig. 3 dargestellten Ausführungsform der Fördervorrichtung ist es auch möglich, dass die Auflagen 18.1...18.5 etc. entlang der Förderrichtung hinsichtlich ihrer Position quer zur Förderrichtung anders verteilt sein können. Beispielsweise ist es möglich, dass jede zweite der Auflagen 18.1...18.5 etc. in den Rollenförderer 12.1 bzw. in den Rollenförderer 12.2 hineinragt. Daneben können auch mehr Auflagen 18.1...18.5 etc. zentral zwischen den Rollenförderern 12.1, 12.2 verbleiben und nur einzelne Auflagen 18.1...18.5 etc. in den einen Rollenförderer 12.1 bzw. den anderen Rollenförderer 12.2 hineinragen. Dabei kann auch eine einzelne Auflage 18.1...18.5 etc. zur Ausdehnung des Kontaktbereichs 32 bzw. 22 quer zur Förderrichtung der Förderungsvorrichtung, also zum Einstellen der Breite des Kontaktbereichs, dienen.

Neben der in Figuren 1 bis 3 dargestellten Ausführungsform sind auch größere oder kleinere Ausführungen der Hubvorrichtung 10 denkbar, bei der beispielsweise mehr als zwei Ladeleisten 14.1 bis 14.4 pro Seite des Objektstapels bzw. nur eine Ladeleiste 14.1, 14.2 pro Seite des Objektstapels unter den Objektstapel geschoben werden können. Für die Realisierung des Verschiebens der Ladeleisten 14.1 bis 14.4 unter den Objektstapel ergeben sich eine Vielzahl von Möglichkeiten. Neben einer manuellen Verschiebung der Ladeleisten kann diese auch maschinell erfolgen.

Bezüglich der Querschnittsseitenansichten aus Figuren 4A, 4B, 5A und 5B ist es möglich, dass die Auflagen 18.3, 18.4 etc. der Hubvorrichtung 10 andersartig ausgestaltet sind. Neben einer L-förmigen Ausführung der Auflagen 18.3, 18.4 etc. können diese beispielsweise auch T-förmig ausgeführt sein. Daneben ist eine in Förderrichtung der Fördervorrichtung versetzte Anordnung der Auflagen 18.3, 18.4 etc. zwar bevorzugt, aber nicht notwendig, um den Erfindungsgegenstand zu realisieren. Die Zahnräder 44.3, 44.4 können hierbei sowohl miteinander gekoppelt, als auch voneinander entkoppelt sein und bieten somit ein erhöhtes Maß an Sicherheit oder an Flexibilität.

## Patentansprüche

1. Fördervorrichtung, insbesondere stationärer Stetigförderer, zum Fördern von Objektstapeln (70), insbesondere von gestapelten Möbelteilen, mit einer integrierten Hubvorrichtung (10), die zwischen einer in einer Förderebene (E) eines Fördermittels der Fördervorrichtung liegenden ersten Position und einer oberhalb der Förderebene (E) des Fördermittels der Fördervorrichtung liegenden zweiten Position verfahrbar ist, wobei die Hubvorrichtung (10) einen Kontaktbereich (22, 32) umfasst, der zum Anheben eines Objektstapels (70) dient, **dadurch gekennzeichnet, dass** die Ausdehnung des Kontaktbereichs (22, 32) quer zur Förderrichtung einstellbar ist.

2. Fördervorrichtung nach Anspruch 1, wobei die Fördervorrichtung zumindest im Bereich der Hubvorrichtung (10) zwei im Wesentlichen parallel zur Förderrichtung verlaufende Fördermittel (12.1, 12.2) aufweist und wobei der Kontaktbereich (22, 32) in der ersten Position der Hubvorrichtung im Wesentlichen zwischen den zwei Fördermitteln (12.1, 12.2) angeordnet ist.

3. Fördervorrichtung nach Anspruch 1 oder 2, wobei der Kontaktbereich (22, 32) mit mehreren Auflagen (18.1-18.5) ausgeführt ist, wobei sich die Auflagen (18.1-18.5) jeweils in einer quer zur Förderrichtung ausgerichteten Richtung erstrecken und zumindest eine der Auflagen (18.1-18.5) entlang dieser Richtung verschiebbar ist.

4. Fördervorrichtung nach einem der Ansprüche 1 bis 3, wobei das bzw. die Fördermittel (12.1, 12.2) als Rollenbahn ausgeführt ist bzw. sind und die Rollen (16.1-16.7) der jeweiligen Rollenbahn (12.1, 12.2) eine Beabstandung (a) voneinander in Förderrichtung aufweisen, wobei die Beabstandung (a) auf eine Auflagelänge zumindest einer Ladeleiste (14.1), bevorzugt zweier Ladeleisten (14.1, 14.2), abgestimmt ist, auf denen der Objektstapel (70) abzulegen ist.

5. Fördervorrichtung nach einem der Ansprüche 1 bis 4, wobei die Hubvorrichtung (10) zumindest einen anhebbaren Rahmen (40) aufweist, der bevorzugt zumindest eine Auflage (18.1-18.5) hält, wobei diese quer zur Förderrichtung verschiebbar ist.

6. Fördervorrichtung nach einem der Ansprüche 1 bis 5, wobei die Hubvorrichtung (10) zwei Auflagereihen (18.2, 18.4; 18.3, 18.5) aufweist, die relativ zueinander, bevorzugt miteinander gekoppelt, quer zur Förderrichtung verschiebbar sind.

7. Fördervorrichtung nach einem der Ansprüche 1 bis 6, wobei die Hubvorrichtung (10) einen quer zur Förderrichtung ausgerichteten Linearantrieb zum Einstellen der Ausdehnung des Kontaktbereichs (22, 32), insbesondere zum Einstellen der jeweiligen Position der Auflagen (18.1-18.5), umfasst.

8. Fördervorrichtung nach Anspruch 7, wobei der Linearantrieb zumindest ein Zahnrad (44.3, 44.4) und zumindest eine Zahnstange (46.3, 46.4) aufweist.

9. Fördervorrichtung nach Anspruch 6 und Anspruch 8, wobei die Auflagereihen (18.2, 18.4; 18.3, 18.5) durch ein Ineinandergreifen von zwei Zahnrädern (44.3, 44.4) des Linearantriebs miteinander gekoppelt quer zur Förderrichtung verschiebbar sind.

10. Fördervorrichtung nach einem der Ansprüche 1 bis 9, wobei sie eine Sensoreinrichtung zum Ermitteln der Abmessung des Objektstapels (70), zumindest quer zur Förderrichtung, aufweist.

11. Verfahren zum Positionieren eines Objektstapels (70), insbesondere von gestapelten Möbelteilen, auf zumindest zwei Ladeleisten (14.1, 14.2) unter Verwendung einer Fördervorrichtung nach einem der Ansprüche 1 bis 9, umfassend
ein Anheben des Objektstapels (70) durch die Hubvorrichtung (10),
danach ein Zuführen der Ladeleisten (14.1, 14.2) quer zur Förderrichtung, wobei die Ladeleisten (14.1, 14.2) auf die Fördermittel (12.1, 12.2) aufgelegt werden und
danach ein Absetzen des Objektstapels (70) auf die Ladeleisten (14.1, 14.2), die sich auf den Fördermitteln (12.1, 12.2) befinden.

12. Verfahren nach Anspruch 11, wobei vor dem Anheben des Objektstapels (70)
ein Einstellen der Ausdehnung des Kontaktbereichs (22, 32) in Abhängigkeit der Abmessung des Objektstapels (70) quer zur Förderrichtung und
ein Zuführen des Objektstapels (70) durch die Fördervorrichtung erfolgt und
nach dem Absetzen des Objektstapels (70) auf die Ladeleisten (14.1, 14.2) ein Weiterfördern des Objektstapels (70) auf den Ladeleisten (14.1, 14.2) durch die Fördervorrichtung durchgeführt wird.

## Claims

1. Conveying device, in particular stationary continuous conveyor, for conveying stacks of objects (70), in particular stacked furniture parts, having an integrated lifting device (10) which is movable between a first position, which lies in a conveying plane (E) of a conveying means of the conveying device, and a second position, which lies above the conveying plane (E) of the conveying means of the conveying device, wherein the lifting device (10) comprises a contact region (22, 32) which serves to lift a stack of objects (70), **characterised in that** the extent of the contact region (22, 32) is adjustable transversely to the direction of conveying.

2. Conveying device according to claim 1, wherein the conveying device has, at least in the region of the lifting device (10), two conveying means (12.1, 12.2) running substantially parallel to the direction of conveying and wherein the contact region (22, 32) in the first position of the lifting device is arranged substantially between the two conveying means (12.1, 12.2).

3. Conveying device according to claim 1 or 2, wherein the contact region (22, 32) is constructed with several supports (18.1-18.5), wherein the supports (18.1-18.5) in each case extend in a direction oriented transversely to the direction of conveying and at least one of the supports (18.1-18.5) is slidable along this direction.

4. Conveying device according to any of claims 1 to 3, wherein the conveying means (12.1, 12.2) is or are constructed as a roller conveyor and the rollers (16.1-16.7) of the respective roller conveyor (12.1, 12.2) have a distance (a) between them in the direction of conveying, wherein the distance (a) is coordinated with a support length of at least one loading strip (14.1), preferably two loading strips (14.1, 14.2) on which the stack of objects (70) is to be deposited.

5. Conveying device according to any of claims 1 to 4, wherein the lifting device (10) has at least one liftable frame (40) which preferably holds at least one support (18.1-18.5), wherein the latter is slidable transversely to the direction of conveying.

6. Conveying device according to any of claims 1 to 5, wherein the lifting device (10) has two rows of supports (18.2, 18.4; 18.3, 18.5) which are slidable transversely to the direction of conveying relative to each other, preferably coupled together.

7. Conveying device according to any of claims 1 to 6, wherein the lifting device (10) comprises a linear drive oriented transversely to the direction of conveying for adjusting the extent of the contact region (22, 32), in particular for adjusting the respective position of the supports (18.1-18.5).

8. Conveying device according to claim 7, wherein the linear drive has at least one gear (44.3, 44.4) and at least one rack (46.3, 46.4).

9. Conveying device according to claim 6 and claim 8, wherein the rows of supports (18.2, 18.4; 18.3, 18.5) are slidable transversely to the direction of conveying, coupled together, by meshing of two gears (44.3, 44.4) of the linear drive.

10. Conveying device according to any of claims 1 to 9, wherein it has a sensor device for determining the dimensions of the stack of objects (70), at least transversely to the direction of conveying.

11. Method for positioning a stack of objects (70), in particular stacked furniture parts, on at least two loading strips (14.1, 14.2) using a conveying device according to any of claims 1 to 9, comprising
lifting of the stack of objects (70) by the lifting device (10),
then delivery of the loading strips (14.1, 14.2) transversely to the direction of conveying, wherein the loading strips (14.1, 14.2) are laid on the conveying means (12.1, 12.2) and
then deposition of the stack of objects (70) on the loading strips (14.1, 14.2) which are located on the conveying means (12.1, 12.2).

12. Method according to claim 11, wherein before lifting of the stack of objects (70)
adjustment of the extent of the contact region (22, 32) is made as a function of the dimensions of the stack of objects (70) transversely to the direction of conveying and
delivery of the stack of objects (70) is effected by the conveying device and
after deposition of the stack of objects (70) on the loading strips (14.1, 14.2), further conveying of the stack of objects (70) on the loading strips (14.1, 14.2) is carried out by the conveying device.

## Revendications

1. Dispositif de transport, en particulier transporteur continu stationnaire, pour transporter des piles d'objets (70), en particulier des parties de meubles empilées, avec un dispositif de levage (10) intégré, déplaçable entre une première position, située dans un plan de transport (E) d'un moyen de transport du dispositif de transport, et une deuxième position, située au-dessus du plan de transport (E) du moyen de transport du dispositif de transport, le dispositif de levage (10) comprenant une zone de contact (22, 32), servant au levage d'une pile d'objets (70), **caractérisé en ce que** l'étendue de la zone de contact (22, 32) est réglable transversalement à la direction de transport.

2. Dispositif de transport selon la revendication 1, dans lequel le dispositif de transport, au moins dans la zone du dispositif de levage (10), présente deux moyens de transport (12.1, 12.2) sensiblement parallèles à la direction de transport et, dans la première position du dispositif de levage, la zone de contact (22, 32) est disposée sensiblement entre les deux moyens de transport (12.1, 12.2).

3. Dispositif de transport selon la revendication 1 ou 2, dans lequel la zone de contact (22, 32) est réalisée avec plusieurs surfaces de pose (18.1 à 18.5), les surfaces de pose (18.1 à 18.5) s'étendant chacune dans une direction orientée transversalement à la direction de transport et au moins l'une des surfaces de pose (18.1 à 18.5) étant déplaçable le long de cette direction.

4. Dispositif de transport selon l'une des revendications 1 à 3, dans lequel le ou les moyens de transport (12.1, 12.2) est/sont réalisés sous forme de transporteur à rouleaux, et les rouleaux (16.1 à 16.7) du transporteur à rouleaux (12.1, 12.2) respectif présentent un espacement (a) mutuel dans la direction de transport, l'espacement (a) étant adapté à une longueur de surface de pose au moins d'une bande de chargement (14.1), de préférence de deux bandes de chargement (14.1, 14.2), sur lesquelles la pile d'objets (70) est à déposer.

5. Dispositif de transport selon l'une des revendications 1 à 4, dans lequel le dispositif de levage (10) présente au moins un cadre (40) levable, maintenant de préférence une surface de pose (18.1 à 18.5), celle-ci étant déplaçable transversalement à la direction de transport.

6. Dispositif de transport selon l'une des revendications 1 à 5, dans lequel le dispositif de transport (10) présente deux rangées de surfaces de pose (18.2, 18.4 ; 18.3, 18.5), déplaçables les unes par rapport aux autres transversalement à la direction de transport, de préférence en étant couplées ensemble.

7. Dispositif de transport selon l'une des revendications 1 à 6, dans lequel le dispositif de transport (10) comprend un entraînement linéaire, orienté transversalement à la direction de transport, pour le réglage de l'étendue de la zone de contact (22, 32), en particulier pour le réglage de la position respective des surfaces de pose (18.1 à 18.5).

8. Dispositif de transport selon la revendication 7, **caractérisé en ce que** l'entraînement linéaire présente au moins une roue dentée (44.3, 44.4) et au moins une crémaillère (46.3, 46.4).

9. Dispositif de transport selon la revendication 6 et la revendication 8, **caractérisé en ce que** les rangées de surfaces de pose (18.2, 18.4 ; 18.3, 18.5) sont déplaçables transversalement à la direction de transport, en étant couplées ensemble par un engrènement l'une dans l'autre de deux roues dentées (44.3, 44.4) de l'entraînement linéaire.

10. Dispositif de transport selon l'une des revendications 1 à 9, présentant un dispositif à capteur pour déterminer les dimensions de la pile d'objets (70), au moins transversalement à la direction de transport.

11. Procédé de positionnement d'une pile d'objets (70), en particulier de parties de meuble empilées, sur au moins deux bandes de chargement (14.1, 14.2) avec utilisation d'un dispositif de transport selon l'une des revendications 1 à 9, comprenant :
un levage de la pile d'objets (70) au moyen du dispositif de levage (10),
ensuite, une amenée des bandes de chargement (14.1, 14.2) transversalement à la direction de transport, les bandes de chargement (14.1, 14.2) étant posées sur les moyens de transport (12.1, 12.2), et
ensuite, une dépose de la pile d'objets (70) sur les bandes de chargement (14.1, 14.2) se trouvant sur les moyens de transport (12.1, 12.2).

12. Procédé selon la revendication 11, dans lequel, avant le soulèvement de la pile d'objets (70), sont effectués :
un réglage de l'étendue de la zone de contact (22, 32) en fonction des dimensions de la pile d'objets (70) transversalement à la direction de transfert, et
une amenée de la pile d'objets (70) au moyen du dispositif de transport, et
après dépose de la pile d'objets (70) sur les bandes de chargement (14.1, 14.2), une reprise de transport de la pile d'objets (70) sur les bandes de chargement (14.1, 14.2) est effectuée, au moyen du dispositif de transport.
